(19) Europäisches Patentamt
European Patent Office
Office européen des brevets

(11) Numéro de publication : **0 112 209**
**B1**

(12) **FASCICULE DE BREVET EUROPÉEN**

(45) Date de publication du fascicule du brevet :
**25.03.87**

(21) Numéro de dépôt : **83402239.4**

(22) Date de dépôt : **21.11.83**

(51) Int. Cl.⁴ : **B 62 D 5/08**

(54) Distributeur hydraulique pour servomécanisme à réaction limitée sur l'organe d'entrée.

(30) Priorité : **11.12.82 ES 518114**

(43) Date de publication de la demande :
**27.06.84 Bulletin 84/26**

(45) Mention de la délivrance du brevet :
**25.03.87 Bulletin 87/13**

(84) Etats contractants désignés :
**DE FR GB IT**

(56) Documents cités :
**EP-A- 0 008 252**
**EP-A- 0 084 487**
**FR-A- 2 308 537**
**FR-A- 2 374 198**

(73) Titulaire : **BENDIX ESPANA S.A.**
**Balmes 243**
**Barcelona 6 (ES)**

(72) Inventeur : **Simon Bacardit, Juan**
**Calle Mallorca 451**
**Barcelona 13 (ES)**

(74) Mandataire : **Le Moenner, Gabriel et al**
**SERVICE BREVETS BENDIX 44, Rue François 1er**
**F-75008 Paris (FR)**

## Description

La présente invention concerne les distributeurs hydrauliques pour servomécanismes, plus particulièrement pour servo-direction de véhicule automobile, du type conformément au préambule de la revendication 1.

Un distributeur de ce type est décrit dans le document FR-A-2 374 198. Dans le distributeur de ce document, le dispositif de réaction est disposé en parallèle avec la valve de distribution, entre deux étranglements d'entrée et de sortie pour la valve de distribution, de façon que le dispositif de réaction soit commandé par les pressions engendrées dans le dispositif d'assistance hydraulique, une vanne de commande, sensible à la pression dans le dispositif de réaction, interrompant sélectivement l'alimentation de ce dernier pour y confiner une pression de réaction maximum déterminée.

Un distributeur de ce type ne permet pas une modulation précise et adaptable de l'effort de réaction et présente l'inconvénient de maintenir pressurisé le dispositif de réaction à une valeur maximum tant que la résistance de la surface de la route demeure importante.

La présente invention a pour objet de proposer un distributeur hydraulique du type général ci-dessus, dans un agencement performant, fiable, permettant une grande souplesse d'utilisation et de nombreuses adaptations, et de faibles coûts de fabrication.

Pour ce faire, selon l'invention, le dispositif de réaction comprend, dans un second moyen de circuit entre la source de pression et la décharge comportant un moyen de modulation à commande externe, des seconds moyens de valve de distribution actionnés en séquence par l'organe d'entrée du distributeur pour fournir sélectivement une pression de réaction agissant sur cet organe d'actionnement d'entrée, les moyens de régulation étant aménagés dans une conduite de dérivation entre le second moyen de circuit et la décharge.

Le document EP-A-0 084 487, au nom de la demanderesse, publié le 27.07.1983, décrit un distributeur hydraulique comportant, dans un second moyen de circuit, un moyen de modulation à commande externe en amont des moyens de distribution propres au dispositif de réaction, mais sans moyens de régulation pour limiter l'effort de réaction en cas, notamment, de disfonctionnement du moyen de modulation.

Avec l'agencement selon l'invention, la réaction peut être modulée avec précision et avec une grande souplesse d'adaptation, avec en outre une sécurité accrue garantissant en toutes circonstances une assistance convenable.

Selon une caractéristique plus particulière de l'invention, les moyens de régulation sont constitués par une valve de régulation de pression chargée par un ressort taré à une valeur correspondant à l'effort de réaction maximal prédéterminé, intercalée dans le circuit hydraulique du dispositif de réaction entre la source de pression et la décharge.

Bien qu'il soit techniquement possible d'agencer une telle valve de régulation et de contrôle de la réaction en aval de chacun des seconds moyens de valves de distribution appliquant la réaction dans le sens voulu, on préfère, conformément à l'invention, intercaler une telle valve de régulation et de contrôle à l'amont du dispositif de réaction, c'est-à-dire à l'entrée commune desdits seconds moyens de valves de distribution, typiquement entre ces derniers et un étranglement variable commandé par l'ordinateur de bord du véhicule et disposé entre le dispositif de réaction et la source de fluide sous pression alimentant également le vérin d'assistance via le distributeur hydraulique.

D'autres caractéristiques et avantages de la présente invention apparaîtront à la lecture de la description suivante de modes de réalisations particuliers, faite en relation avec les dessins annexés sur lesquels :

La Figure 1 est un diagramme schématique fonctionnel d'un distributeur hydraulique selon l'invention ;

La Figure 2 illustre le diagramme pression de réaction P en fonction du couple C obtenu grâce au système de la figure 1 ;

La Figure 3 est une vue schématique en coupe transversale d'un distributeur de commande de servodirection à rotor en étoile conformément à l'invention ; et

La Figure 4 est une vue schématique partielle en développée du distributeur de la Figure 3.

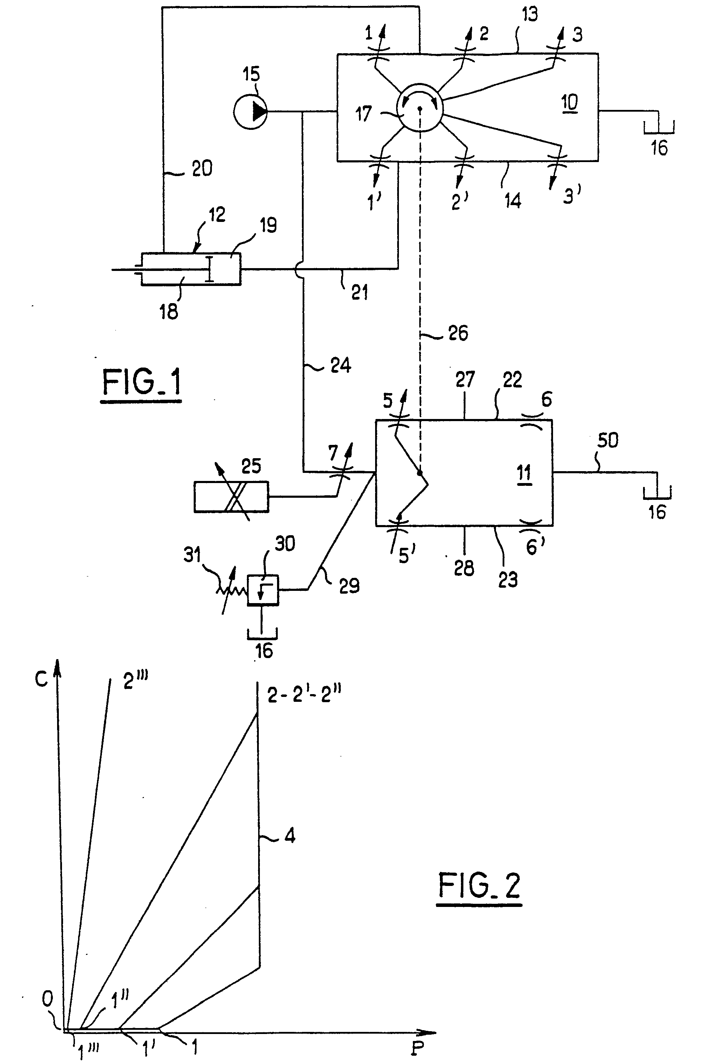

La Figure 1 montre schématiquement un distributeur hydraulique 10 pourvu d'un dispositif de commande de réaction 11 et servant à contrôler un actionneur d'assistance à double effet 12, par exemple pour l'assistance d'un mécanisme de direction d'un véhicule.

Le distributeur 10, selon une disposition connue, comprend deux circuits parallèles 13 et 14 entre une source de pression 15 (pompe hydraulique ou tout autre dispositif) et une décharge 16 et dans chacun desquels trois dispositifs d'étranglements ou restrictions modulables 1, 2 et 3-1', 2' et 3', respectivement, sont montés en série de manière à être actionnés simultanément par l'organe de commande 17 du distributeur. Les deux chambres de travail 18 et 19 de l'actionneur d'assistance 12 sont reliées, respectivement, par les canalisations 20 et 21 aux portions de circuits 13 et 14 situées entre les étranglements 1 et 2 ou 1' et 2'.

Le système distributeur de réaction 11 comprend de même deux circuits parallèles 22 et 23 entre une tuyauterie d'arrivée de fluide sous pression 24, reliée à la source de pression 15 et dans laquelle est intercalé un étranglement extérieur variable 7 commandé par un actionneur 25 asservi à l'ordinateur de bord, et la décharge 16. Chacun de ces circuits 22 et 23 est muni de deux étranglements en série 5 et 6, 5' et 6', respectivement. Dans le mode de réalisation représenté, les étranglements aval 6, 6' sont fixes tandis que les étranglements amont 5, 5' sont variables et actionnés, par l'intermédiaire d'une transmission figurée en 26, à partir de l'organe de commande 17 du distributeur de commande d'assistance 10.

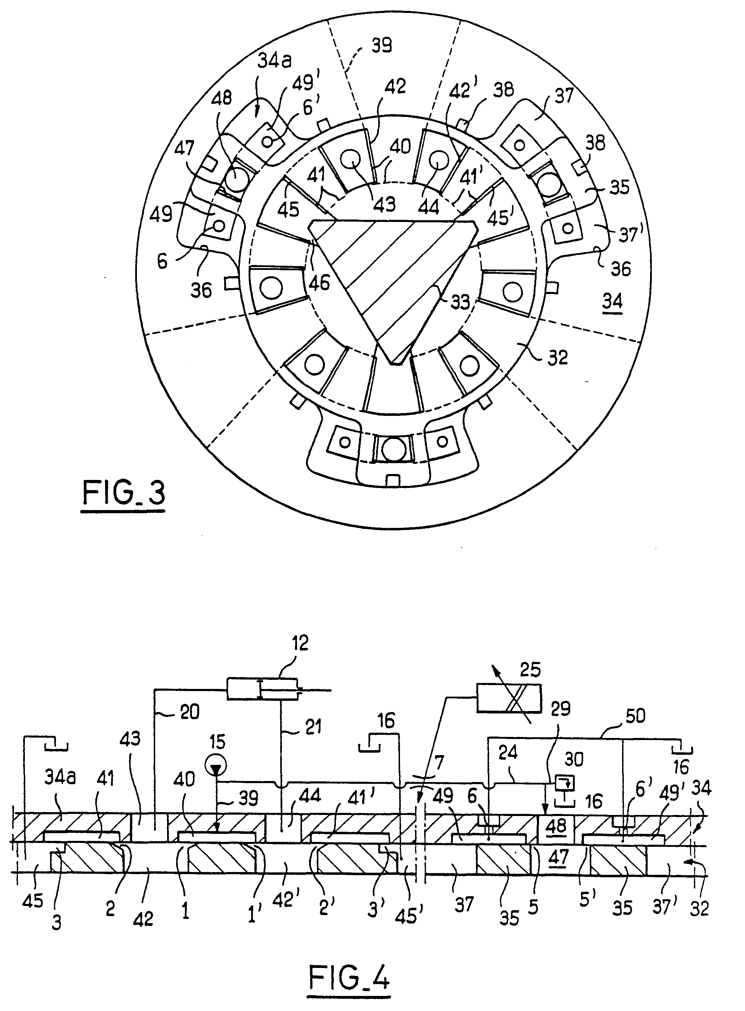

Il est sous-entendu que ces dispositions des circuits ne sont que symboliques et qu'on peut les adapter, dans la pratique, à toutes les réalisations connues et utilisées en général, telles que par exemple le montage à distributeur à stator discoïde et rotor étoilé décrit plus loin, en se référant aux Fig. 3 et 4. Dans tous les cas, des conduits reliés aux actionneurs à réaction, désignés par les repères 27 et 28, partent respectivement des branches 22 et 23 du système de réaction 11, entre les étranglements 5, 6 et 5', 6'.

Dans le mode de réalisation représenté, à l'entrée du système de réaction 11, c'est-à-dire en aval de l'étranglement 7 commandé par l'ordinateur de bord par l'intermédiaire de l'actionneur 25, il est prévu, conformément à l'invention, une dérivation 29 conduisant à l'entrée d'une vanne de régulation de pression ou de délestage 30 dont la sortie aboutit à la décharge 16 ; cette vanne 30 est soumise à la sollicitation d'un ressort 31 dont la force peut être réglée afin de déterminer la réaction maximale désirée.

On comprendra aisément le fonctionnement à partir des dessins, en tenant compte des précisions suivantes : les premiers étranglements mis en œuvre sont les étranglements 5 ou 5', qui remplissent une fonction logique OU en plaçant le système dans un état de réaction correspondant au sens de rotation appliqué à l'organe de commande d'entrée 17, puis l'étranglement 2 ou 2' est mis en œuvre et provoque une augmentation de la pression de commande d'entrée dans le distributeur 10 mais non de la force d'assistance étant donné que cette dernière demeure égale des deux côtés 18 et 19 du vérin d'assistance 12. Le système se trouve dans la zone de fonctionnement 0-1'''-1''-1'-1 de la caractéristique de la Fig. 2. L'étranglement 1 (ou 1') entre ensuite en jeu, ce qui augmente alors la pression différentielle d'assistance et la pression à l'entrée du distributeur afin de produire les pressions de réaction correspondant au sens de rotation choisi. Dans ce cas, on obtient un fonctionnement représenté par les portions de caractéristiques 1-1'-1''-1''' de la Fig. 2, suivant la position de l'étranglement 7 déterminée par l'ordinateur de bord. D'autre part, la vanne de régulation 30 limite la pression de réaction à une valeur déterminée, sur la caractéristique de la Fig. 2, par la verticale 4 qui, tout en permettant d'utiliser pratiquement la totalité de la pression d'alimentation afin de la convertir en pression de réaction lors de la marche à grande vitesse, empêche que la pression de réaction ne dépasse un maximum prédéterminé même si l'étranglement variable 7 est maintenu grand ouvert par le relais 25 pour produire un niveau de réaction plus élevé que celui qui correspond à un état de marche déterminé, par exemple lors des manœuvres de stationnement. En réglant la force du ressort 31, la verticale 4 effectuera une translation parallèle dans le graphique de la Fig. 2.

Les Fig. 3 et 4 illustrent une application pratique des perfectionnements objet de l'invention à un distributeur de servo-direction à stator discoïde et rotor en étoile tel que décrit, par exemple, dans la demande de brevet européen EP-A-0 021 970 de la demanderesse, et qui comprend essentiellement un rotor 32 relié en rotation à l'arbre 33 provenant du volant de direction d'un véhicule, et monté dans un stator 34 relié d'une manière non représentée au mécanisme d'orientation des roues du véhicule. Le rotor 32 est muni de bras 35 logés dans des cavités 36 du stator de manière à former de part et d'autre de chaque bras deux chambres de réaction antagonistes 37 et 37', limitées axialement par les deux disques couvercles 34a qui ferment les deux faces du stator ; plusieurs joints tels que 38 isolent de manière adéquate les divers logements et passages formés dans l'ensemble décrit plus haut.

Au moins l'un des couvercles 34a du stator 34 est muni de rainures radiales 39 qui communiquent avec des cavités d'entrée 40 du distributeur dont les cavités de décharge 41 et 41' sont formées individuellement, dans le stator, des deux côtés de chaque cavité d'entrée 40. Le rotor 32 est muni de lumières 42 et 42' qui, en position centrée de repos du distributeur, recouvrent légèrement les extrémités adjacentes des cavités 40 et 41 ou 41', respectivement, entre lesquelles sont aménagés des passages 43 et 44 qui sont reliés à des canalisations 20 et 21 aboutissant aux chambres respectives du vérin d'assistance 12. Les cavités de décharge 41 et 41' recouvrent également partiellement, respectivement, deux autres lumières 45 et 45' du rotor qui communiquent avec la décharge 16 par des passages de sortie aménagés dans la partie centrale du distributeur et dont seules les rainures radiales 46 dans le rotor sont représentées à la Fig. 3. D'autre part, chaque bras 35 du rotor 32 est muni d'une lumière centrale 47 tandis que les couvercles 34a sont dotés, en face de la lumière 47 en question, d'une ouverture d'entrée 48, reliée à la canalisation 24 d'entrée de fluide sous pression et, de part et d'autre de l'ouverture 48, de deux cavités 49 et 49' communiquant avec les chambres de réaction correspondantes, 37 et 37' et d'où partent des conduites de décharge 50 par l'intermédiaire de passages calibrés qui constituent les étranglements fixes 6 et 6' de la Fig. 1.

La Fig. 4 illustre en développée le distributeur à rotor étoilé de la Fig. 3 et fait apparaître également la vanne de délestage de régulation 30 et l'étranglement variable 7 commandé par l'actionneur 25.

On déduira clairement le fonctionnement de ce distributeur de la description qui précède.

**Revendications**

1. Distributeur hydraulique pour servomécanisme, plus particulièrement pour servo-direction de véhicule automobile, comprenant, dans un premier moyen de circuit (13, 14) entre une source de fluide sous pression (15) et une décharge (16), des premiers moyens de valve de distribution (1, 2, 3 ; 1', 2', 3') pour un dispositif d'assistance hydraulique (12) actionnables par un organe d'entrée (33) du distributeur, et un dispositif de réaction (11) couplé à l'organe d'entrée et actionné hydrauliquement pour fournir un effort de réaction opposé au couple d'actionnement exercé sur l'organe d'entrée et proportionnel à la force d'assistance fournie par le dispositif d'assistance, et des moyens de régulation (30, 31) actionnables lorsque l'effort de réaction appliqué atteint une valeur maximale prédéterminée pour limiter l'effort de réaction à cette valeur prédéterminée, caractérisé en ce que le dispositif de réaction (11) comprend, dans un second moyen de circuit (24, 50) entre la source de pression (15) et la décharge (16) comportant un moyen de modulation (7, 25) à commande externe, des seconds moyens de valve de distribution (5, 5') actionnés en séquence par l'organe d'entrée (33) du distributeur pour fournir sélectivement une pression de réaction agissant sur cet organe d'actionnement d'entrée (33), les moyens de régulation (30, 31) étant aménagés dans une conduite de dérivation (29) entre le second moyen de circuit (24, 50) et la décharge (26).

2. Distributeur hydraulique selon la revendication 1, caractérisé en ce que les moyens de régulation sont constitués par une valve de délestage sensible à la pression (30) chargée par un ressort (31) taré à une valeur correspondant à l'effort de réaction maximal prédéterminé.

3. Distributeur hydraulique selon la revendication 1 ou la revendication 2, caractérisé en ce que les moyens de régulation (30, 31) sont disposés en amont du dispositif de réaction (11) dans le second moyen de circuit (24, 50).

4. Distributeur hydraulique selon la revendication 3, caractérisé en ce que le moyen de modulation comprend un étranglement variable (7) piloté extérieurement (25) disposé en amont des moyens de régulation (30, 31) dans le second moyen de circuit (24, 50).

5. Distributeur hydraulique selon l'une des revendications 2 à 4, caractérisé en ce que les seconds moyens de valves de distribution (5, 5') assurent une fonction logique OU de présélection du sens de la réaction à appliquer en étant actionnés par l'organe d'entrée (31) en avance de phase par rapport aux premiers moyens de valves de distribution (1, 2, 3 ; 1', 2', 3').

6. Distributeur hydraulique selon l'une des revendications 1 à 5, caractérisé en ce que le distributeur hydraulique est du type à rotor en étoile (32).

7. Distributeur hydraulique selon la revendication 6, caractérisé en ce que le dispositif de réaction (11) est constitué par au moins un bras (35) du rotor en étoile (32) mobile à l'intérieur d'une cavité (36) du stator (34) du distributeur et définissant dans cette cavité deux chambres de réaction opposés (37, 37') agencées dans le second moyen de circuit (24, 50).

**Claims**

1. A hydraulic distributor for use with a servo mechanism, particularly a power steering system of an automotive vehicle, comprising first distributing valve means (1, 2, 3 ; 1', 2', 3') arranged in first circuit means (13, 14) extending between a pressure fluid source (15) and low pressure fluid collecting means, said first distributing valve means being associated to a hydraulic servo motor and being activated in accordance with movement of an input member (33) of the distributor ; comprising reacting force generating means (11) coupled to said input member and being actuated by hydraulic pressure fluid to produce a reaction force the sense of which is opposed to the actuating torque applied to the input member and the amplitude of which is proportional to the servo force provided by the servo motor ; and comprising regulating means (30, 31), which upon the reaction force produced reaching a predetermined maximum value will limit the reaction force to this predetermined value ; characterized in that the reaction force generator comprises externally actuated modulating means (7, 25) arranged in second circuit means (24, 59) extending between the pressure fluid source (15) and the fluid collecting means as well as second distributing valve means (5, 5') actuated in accordance with the travel of the input member (33) of the distributor to selectively establish a reaction pressure applied to the input member (33) ; and in that said regulating means (30, 31) are arranged in a tapping line (29) extending between said second circuit means (24, 50) and said fluid collecting means (16).

2. The hydraulic distributor as claimed in claim 1, characterized in that said regulating means are formed by a pressure responsive relief valve (30) being biased by spring means (31), said spring means being adjusted to a value corresponding to said predetermined maximum reaction force.

3. The hydraulic distributor as claimed in claim 1 or 2, characterized in that said hydraulic regulating means (30, 31) are arranged in said second circuit means (24, 50) ahead of the reaction force generator (11) as seen in the direction of fluid flow.

4. The hydraulic distributor as claimed in claim 3, characterized in that the modulating means comprise a variable restriction (7) being externally (25) controlled and being arranged in said second circuit means (24, 50) ahead of the regulating means (30, 31) as seen in the direction of fluid flow.

5. The hydraulic distributor as claimed in one of claims 2-4, characterized in that said second distributing valve means (5, 5') perform a logic OR function in view of preselecting the direction of the reaction force to be produced, the second distributing valve means (5, 5') being actuated by the input member (33) under positive or advanced phase shift conditions as compared to the first distributing valve means (1, 2, 3 ; 1', 2', 3').

6. Hydraulic distributor as claimed in one of claims 1-5, characterized in that the hydraulic distributor comprises a star-shaped rotor (32).

7. The hydraulic distributor as claimed in claim 6, characterized in that the reaction force generator (11) is formed by at least one arm (35) of the star-shaped rotor (32) which is movable within a cavity (36) of the stator (34) of the distributor and defines in said cavity two opposing reaction chambers (37, 37') forming part of said second circuit means (24, 50).

## Patentansprüche

1. Hydraulischer Verteiler für einen Servomechanismus, insbesondere für die Lenkhilfe eines Kraftfahrzeuges, mit einem ersten Verteilerventil (1, 2, 3 ; 1', 2', 3'), welches in einem ersten, zwischen einer Druckmittelquelle (15) und einem Sumpf (16) verlaufenden Strömungskreis (13, 14) angeordnet ist, welches einem hydraulischen Servomotor zugeordnet ist und welches durch ein Stellglied (33) des Verteilers betätigbar ist ; mit einem Reaktionskraftgenerator (11), der mit dem Stellglied gekoppelt ist und durch hydraulische Betätigung eine Reaktionskraft erzeugt, welche dem auf das Stellglied ausgeübten Betätigungsmoment entgegengesetzt ist und proportional zu der vom Servomotor erzeugten Servokraft ist ; und mit einer Regeleinrichtung (30, 31), die dann, wenn die ausgeübte Reaktionskraft einen vorgegebenen Maximalwert erreicht, die Reaktionskraft auf diesen vorgegebenen Wert begrenzt ; dadurch gekennzeichnet, daß der Reaktionskraftgenerator eine extern betätigte Modulationseinrichtung (7, 25), die in einem zweiten zwischen der Druckmittelquelle (15) und dem Sumpf (16) verlaufenden Strömungskreis (24, 50) angeordnet ist, und ein zweites Verteilerventil (5, 5') aufweist, welches gemäß der Bewegung des Stellgliedes (33) des Verteilers betätigt wird, um so gezielt einen Reaktionsdruck zu erzeugen, der auf das Stellglied (33) einwirkt ; und daß die Regeleinrichtung (30, 31) in einer Zweigleitung (29) angeordnet ist, welche zwischen dem zweiten Strömungskreis (24, 50) und dem Sumpf (16) verläuft.

2. Hydraulischer Verteiler nach Anspruch 1, dadurch gekennzeichnet, daß die Regeleinrichtung durch ein Entlastungsventil (30) gebildet ist, welches auf Druck anspricht und durch eine Feder (31) vorgespannt ist, wobei diese Feder auf einen Wert voreingestellt ist, der der vorgegebenen maximalen Reaktionskraft zugeordnet ist.

3. Hydraulischer Verteiler nach Anspruch 1 oder 2, dadurch gekennzeichnet, daß die Regeleinrichtung (30, 31) stromauf des Reaktionskraftgenerators (11) in dem zweiten Strömungskreis (24, 50) angeordnet ist.

4. Hydraulischer Verteiler nach Anspruch 3, dadurch gekennzeichnet, daß die Modulationseinrichtung (7, 25) eine variable Drossel (7) aufweist, die extern (25) gesteuert wird und stromauf der Regeleinrichtung (30, 31) in dem zweiten Strömungskreis (24, 50) angeordnet ist.

5. Hydraulischer Verteiler nach einem der Ansprüche 2-4, dadurch gekennzeichnet, daß das zweite Verteilerventil (5, 5') eine logische ODER-Funktion erfüllt, durch welche die Richtung der auszuübenden Reaktionskraft voreingestellt wird, wobei dies dadurch erfolgt, daß das zweite Verteilerventil durch das Stellglied (33) in der Phasenlage gegenüber dem ersten Verteilerventil (1, 2, 3 ; 1', 2', 3') vorverschoben betätigt wird.

6. Hydraulischer Verteiler nach einem der Ansprüche 1-5, dadurch gekennzeichnet, daß der hydrauslische Verteiler einen sternförmigen Rotor (32) aufweist.

7. Hydraulischer Verteiler nach Anspruch 6, dadurch gekennzeichnet, daß der Reaktionskraftgenerator (11) zumindest einen Arm (35) des sternförmigen Rotors (32) aufweist, der im Inneren einer Kammer (36) des Stators (34) des Verteilers bewegbar ist und in dieser Kammer zwei einander gegenüberliegende Reaktionskammern (37, 37') begrenzt, welche strömungsmäßig zu dem zweiten Strömungskreis (24, 50) gehören.

**0 112 209**

FIG.1

FIG.2

FIG. 3

FIG. 4